(19) Europäisches Patentamt
European Patent Office
Office européen des brevets

(11) EP 1 394 189 B1

(12) **EUROPÄISCHE PATENTSCHRIFT**

(45) Veröffentlichungstag und Bekanntmachung des Hinweises auf die Patenterteilung:
**02.11.2006 Patentblatt 2006/44**

(51) Int Cl.:
***C08G 18/38*** *(2006.01)*

(21) Anmeldenummer: **03018085.5**

(22) Anmeldetag: **08.08.2003**

(54) **Thermoplastisch verarbeitbare Polyurethane (TPU) mit selbstverlöschenden Eigenschaften, ein Verfahren zu ihrer Herstellung und ihre Verwendung**

Thermoplastic polyurethanes having selfextinguishing properties, a process for their preparation and use.

Polyuréthanes thermoplastiques ayant des proprietés auto-extinctrices, un procédé pour leur préparation et utilisation

(84) Benannte Vertragsstaaten:
**BE DE FR GB IT NL**

(30) Priorität: **21.08.2002 DE 10238111**

(43) Veröffentlichungstag der Anmeldung:
**03.03.2004 Patentblatt 2004/10**

(73) Patentinhaber: **Bayer MaterialScience AG**
**51368 Leverkusen (DE)**

(72) Erfinder:
- **Peerlings, Henricus, Dr.**
**42699 Solingen (DE)**
- **Bräuer, Wolfgang, Dr.**
**51375 Leverkusen (DE)**
- **Wussow, Hans-Georg, Dr.**
**40597 Düsseldorf (DE)**
- **Winkler, Jürgen**
**40764 Langenfeld (DE)**
- **Hoppe, Hans-Georg**
**42799 Leichlingen (DE)**

(56) Entgegenhaltungen:
**EP-A- 0 122 894** **GB-A- 1 122 545**

- **CHEMICAL ABSTRACTS, Bd. 89, Nr. 14, 14. Oktober 1978 (1978-10-14), Columbus, Ohio, US; abstract no.: 111237q,"Self-extinguishing polyurethanes" Seite 67 Spalte 1 XP002263728 & SU 576 763 A (INSTITUTE OF THE CHEMISTRY OF HIGH-MOLECULAR WEIGHT COMPOUNDS) 5. Juni 1978 (1978-06-05)**
- **CHEMICAL ABSTRACTS, Bd. 124, Nr. 24, 10. Juni 1996 (1996-06-10), Columbus, Ohio, US; abstract no.: 318045n,"Synthesis and characterization of phosphorus containing segemneted polyurethanes" Seite 11 XP0000665523 & OING ET AL: POLYM. PREPR., Bd. 37, Nr. 1, 1996, Seiten 579-580,**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 394 189 B1

## Beschreibung

Die vorliegende Erfindung betrifft thermoplastisch verarbeitbare Polyurethanelastomere (TPU) mit selbstverlöschenden Eigenschaften, ein Verfahren zu ihrer Herstellung sowie ihre Verwendung.

Thermoplastische Polyurethane (TPU) sind wegen ihrer guten Elastomereigenschaften und thermoplastischen Verarbeitbarkeit von großer technischer Bedeutung. Eine Übersicht über die Herstellung, Eigenschaften und Anwendungen von TPU ist z.B. im Kunststoff Handbuch [G. Becker, D. Braun], Band 7 "Polyurethane", München, Wien, Carl Hanser Verlag, 1983 gegeben.

TPU werden zumeist aus linearen Polyolen (Makrodiolen), wie Polyester-, Polyether- oder Polycarbonatdiolen, organischen Diisocyanaten und kurzkettigen, zumeist difunktionellen Alkoholen (Kettenverlängerern) aufgebaut. Sie können kontinuierlich oder diskontinuierlich hergestellt werden. Die bekanntesten Herstellverfahren sind das Bandverfahren (GB-A 1 057 018) und das Extruderverfahren (DE-A 19 64 834).

Der Aufbau der thermoplastisch verarbeitbaren Polyurethanelastomere kann entweder schrittweise (Prepolymerdosierverfahren) oder durch die gleichzeitige Reaktion aller Komponente in einer Stufe (one-shot-Dosierverfahren) erfolgen.

Um eine gute Flammwidrigkeit in Polymeren zu erreichen, können Additive unterschiedlicher Art eingesetzt werden. Häufig kommen dafür halogenhaltige Materialien, anorganische Füllstoffe oder organische Phosphorverbindungen oder Gemische davon zum Einsatz. Ein Übersicht über den Einsatz von Flammschutzmitteln in Polymeren ist z. B. in H. Zweifel, Plastics Additives Handbook, 5$^{th}$ Ed., Hanser Verlag München, 2001, Kapitel 12; J. Green, J. of Fire Sciences, 1997, 15, S. 52-67 oder Kirk-Othmer Encyclopedia of Chemical Technology, 4$^{th}$ Ed., Vol. 10, John Wiley & Sons, New York, S. 930-998 gegeben.

Als Flammschutzmittel in thermoplastisch verarbeitbaren Polyurethanelastomeren (TPU) kommen unterschiedliche Substanzen oder deren Gemische in Frage.

So wird in EP-B 0 508 072 der Einsatz von Melamin in Mengen von 30 bis 40 Gew.-% als Flammschutzmittel in TPU beschrieben. Das so behandelte TPU weist eine Zugfestigkeit von 15 MPa auf und wird mit UL-94 V-0 bewertet.

In WO 00/66658 und EP-B 617 079 werden Kombinationen aus Phosphaten, Phosphonaten und/oder deren Derivaten in Kombination mit Melamincyanurat beschrieben. Die entsprechenden TPU weisen Zugfestigkeiten von <35 MPa auf und der Flammschutz wird mit UL-94 V-0 bewertet.

Als problematisch beim Einsatz von Flammschutzmitteln auf anorganischer Basis oder von Melaminderivaten hat sich das stark abfallende Niveau an mechanischen Eigenschaften, verursacht durch die hohen notwendigen Einsatzmengen, erwiesen. Ebenfalls wird eine unerwünschte Migration der eingesetzten organischen Derivate, z. B. der Phosphate oder Phosphonate beobachtet.

Aufgabe der Erfindung war es daher, thermoplastisch verarbeitbare Polyurethanelastomere (TPU) zur Verfügung zu stellen, die selbstverlöschend sind, gleichzeitig eine geringe Schwindung und eine hohe Zugfestigkeit aufweisen und die keine oder nur geringe Ausblüheffekte zeigen.

Diese Aufgabe konnte dadurch gelöst werden, dass über das sogenannte Prepolymerverfahren bestimmte einbaufähige phosphorhaltige Verbindungen in das TPU eingebaut werden.

Einbaufähige Diolphosphonate als Flammschutzmittel sind im Bereich der Polyurethan-Schäume bekannt und werden z. B. in DE-C-25 20 180 beschrieben. Einsatz dieses Flammschutzmittels führt allerdings zu erhöhten Schwindungen im Bereich der TPU.

EP-A-0 122 894 offenbart Polyurethan-Elastomere aus NCO-terminierten Elastomer-prepolymeren gebildet aus Polyhydroxy-Polyethern oder -Polyestern und vernetzt mit Polyhydroxyalkylphosphinoxiden.

Gegenstand der Erfindung sind thermoplastisch verarbeitbare Polyurethanelastomere (TPU) mit Zugfestigkeiten von >35 MPa (gemessen nach EN ISO 527-3), mit Schwindungen von <3% und mit selbstverlöschenden Eigenschaften erhältlich gegebenenfalls in Gegenwart von Katalysatoren (E) durch Umsetzung eines NCOgruppenhaltigen Prepolymers aus

A) wenigstens einem organischen Diisocyanat und

B) wenigstens einem Polyol mit im Mittel mindestens 1,8 und höchstens 3,0 zerewitinoffaktiven Wasserstoffatomen und einem zahlenmittleren Molekulargewicht $\overline{M}_n$ von 450 bis 10000 mit

C) wenigstens einem niedermolekularen Polyol oder Polyamin mit im Mittel mindestens 1,8 und höchstens 3,0 zerewitinoffaktiven Wasserstoffatomen und einem zahlenmittleren Molekulargewicht $\overline{M}_n$ von 60 bis 400 als Kettenverlängerer und

D) mindestens einer organischen phosphorhaltigen Verbindung auf Basis Phosphonat und/oder Phosphinoxid mit im Mittel mindestens 1,5 und höchstens 3,0 zerewitinoffaktiven Wasserstoffatomen und einem zahlenmittleren

Molekulargewicht $\overline{M}_n$ von 60 bis 10000 in einer Menge von 1 bis 15 Gew.-%, bezogen auf das TPU, welches die folgende Strukturformel aufweist

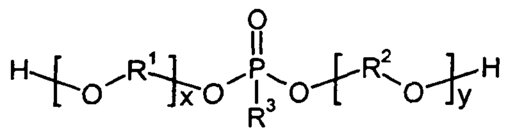

(I)

mit

$R^1$, $R^2$ = verzweigte oder unverzweigte Alkylenreste mit 1 bis 24 C-Atomen, substituierte oder nicht-substituierte Arylenreste mit 6 bis 20 C-Atomen, substituierte oder nicht-substituierte Aralkylenreste mit 6 bis 30 C-Atomen, substituierte oder nicht-substituierte Alkarylenreste mit 6 bis 30 C-Atomen, wobei $R^1$ und $R^2$ gleich oder verschieden sein können,

$R^3$ = H, verzweigte oder unverzweigte Alkylreste mit 1 bis 24 C-Atomen, substituierte oder nicht-substituierte Arylreste mit 6 bis 20 C-Atomen, substituierte oder nicht-substituierte Aralkylreste mit 6 bis 30 C-Atomen, substituierte oder nicht-substituierte Alkarylreste mit 6 bis 30 C-Atomen,

x, y = 1 bis 50

oder

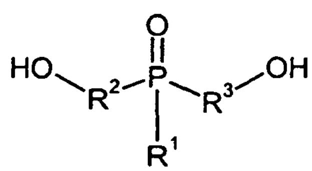

(II)

mit

$R^1$ = H, verzweigte oder unverzweigte Alkylreste mit 1 bis 24 C-Atomen, substituierte oder nicht-substituierte Arylreste mit 6 bis 20 C-Atomen, substituierte oder nicht-substituierte Aralkylreste mit 6 bis 30 C-Atomen, substituierte oder nicht-substituierte Alkarylreste mit 6 bis 30 C-Atomen,

$R^2$, $R^3$= verzweigte oder unverzweigte Alkylenreste mit 1 bis 24 C-Atomen, substituierte oder nicht-substituierte Arylenreste mit 6 bis 20 C-Atomen, substituierte oder nicht-substituierte Aralkylenreste mit 6 bis 30 C-Atomen, substituierte oder nicht-substituierte Alkarylenreste mit 6 bis 30 C-Atomen, wobei $R^2$ und $R^3$ gleich oder verschieden sein können,

gegebenenfalls unter Verwendung von

F) mindestens einem weiteren Flammschutzmittel, welches keine zerewitinoffaktiven Wasserstoffatome enthält und ein zahlenmittleres Molekulargewicht $\overline{M}_n$ von 60 bis 10000 aufweist, in einer Menge von 0 bis 70 Gew.-%, bezogen auf das TPU, und

G) 0 bis 20 Gew.-%, bezogen auf die Gesamtmenge TPU, weiterer Hilfs- und Zusatzstoffe,

wobei die Kennzahl (gebildet aus dem mit 100 multiplizierten Quotienten der Äquivalenzverhältnisse der Isocyanatgruppen aus (A) und der Summe der zerewitinoffaktiven Wasserstoffatome der Verbindungen (B), (C) und (D)) 85 bis 120 beträgt.

Die Komponenten (B) und (C) sind von Komponente (D) verschieden.

Als organische Diisocyanate (A) können aliphatische, cycloaliphatische, araliphatische, aromatische und heterocyclische Diisocyanate oder beliebige Gemische dieser Diisocyanate verwendet werden (vgl. HOUBEN-WEYL "Methoden der organischen Chemie", Band E20 "Makromolekulare Stoffe", Georg Thieme Verlag, Stuttgart, New York 1987,

S. 1587-1593 oder Justus Liebigs Annalen der Chemie, 562, Seiten 75 bis 136).

Im einzelnen seien beispielhaft genannt: aliphatische Diisocyanate wie Ethylendiisocyanat, 1,4-Tetramethylendiisocyant, 1,6-Hexamethylendüsocyanat, 1,12-Dodecandiisocyanat; cycloaliphatische Diisocyanate wie Isophorondiisocyanat, 1,4-Cyclohexandiisocyanat, 1-Methyl-2,4-cyclohexandiisocyanat und 1-Methyl-2,6-cyclohexandiisocyanat sowie die entsprechenden Isomerengemische, 4,4'-Dicyclohexylmethandiisocyanat, 2,4'-Dicyclohexylmethandiisocyanat und 2,2'-Dicyclohexylmethandiisocyanat sowie die entsprechenden Isomerengemische; außerdem aromatische Diisocyanate, wie 2,4-Toluylendiisocyanat, Gemische aus 2,4-Toluylendiisocyanat und 2,6-Toluylendiisocyanat, 4,4'-Diphenylmethandiisocyanat, 2,4'-Diphenylmethandiisocyanat und 2,2'-Diphenylmethandiisocyanat, Gemische aus 2,4'-Diphenylmethandiisocyanat und 4,4'-Diphenylmethandiisocyanat, urethanmodifizierte flüssige 4,4'-Diphenylmethandiisocyanate oder 2,4'-Diphenylmethandiisocyanate, 4,4'-Diisocyanatodiphenylethan-(1,2) und 1,5-Naphthylendiisocyanat. Vorzugsweise verwendet werden 1,6-Hexamethylendiisocyanat, 1,4-Cyclohexandiisocyanat, Isophorondiisocyanat, Dicyclohexylmethandiisocyanat, Diphenylmethandiisocyanat-Isomerengemische mit einem 4,4'-Diphenylmethandiisocyanatgehalt von mehr als 96 Gew.-% und insbesondere 4,4'-Diphenylmethandiisocyanat und 1,5-Naphthylendiisocyanat. Die genannten Diisocyanate können einzeln oder in Form von Mischungen untereinander zur Anwendung kommen. Sie können auch zusammen mit bis zu 15 mol-% (berechnet auf Gesamt-Diisocyanat) eines Polyisocyanates verwendet werden, es darf aber höchstens soviel Polyisocyanat zugesetzt werden, dass ein noch thermoplastisch verarbeitbares Produkt entsteht. Beispiele für Polyisocyanate sind Triphenylmethan-4,4',4"-triisocyanat und Polyphenylpolymethylenpolyisocyanate.

Zerewitinoffaktive Polyole (B), die bei den erfindungsgemäßen Produkten eingesetzt werden, sind solche mit im Mittel mindestens 1,8 bis höchstens 3,0 zerewitinoffaktiven Wasserstoffatomen und einem zahlenmittleren Molekulargewicht $\bar{M}_n$ von 450 bis 10000. Produktionsbedingt enthalten diese oft kleine Mengen an nichtlinearen Verbindungen. Häufig spricht man daher auch von "im wesentlichen linearen Polyolen". Bevorzugt sind Polyester-, Polyether-, Polycarbonat-Diole oder Gemische aus diesen.

Eingeschlossen sind neben Aminogruppen, Thiolgruppen oder Carboxylgruppen aufweisenden Verbindungen insbesondere zwei bis drei, bevorzugt zwei Hydroxylgruppen aufweisende Verbindungen, speziell solche mit zahlenmittleren Molekulargewichten $\bar{M}_n$ von 450 bis 6000, besonders bevorzugt solche mit einem zahlenmittleren Molekulargewicht $\bar{M}_n$ von 600 bis 4500; z.B. Hydroxylgruppen aufweisende Polyester, Polyether, Polycarbonate und Polyesteramide.

Geeignete Polyether-Diole können dadurch hergestellt werden, dass man ein oder mehrere Alkylenoxide mit 2 bis 4 Kohlenstoffatomen im Alkylenrest mit einem Startermolekül, das zwei aktive Wasserstoffatome gebunden enthält, umsetzt. Als Alkylenoxide seien z.B. genannt: Ethylenoxid, 1,2-Propylenoxid, Epichlorhydrin und 1,2- Butylenoxid und 2,3-Butylenoxid. Vorzugsweise Anwendung finden Ethylenoxid, Propylenoxid und Mischungen aus 1,2-Propylenoxid und Ethylenoxid. Die Alkylenoxide können einzeln, alternierend nacheinander oder als Mischungen verwendet werden. Als Startermoleküle kommen beispielsweise in Betracht: Wasser, Aminoalkohole, wie N-Alkyl-diethanolamine, beispielsweise N-Methyl-diethanolamin und Diole wie Ethylenglykol, 1,3-Propylenglykol, 1,4-Butandiol und 1,6-Hexandiol. Gegebenenfalls können auch Mischungen von Startermolekülen eingesetzt werden. Geeignete Polyetherole sind ferner die hydroxylgruppenhaltigen Polymerisationsprodukte des Tetrahydrofurans. Es können auch trifunktionelle Polyether in Anteilen von 0 bis 30 Gew.-% bezogen auf die bifunktionellen Polyether eingesetzt werden, jedoch höchstens in solcher Menge, dass ein noch thermoplastisch verarbeitbares Produkt entsteht. Die im wesentlichen linearen Polyether-Diole besitzen vorzugsweise zahlenmittlere Molekulargewichte $\bar{M}_n$ von 450 bis 6000. Sie können sowohl einzeln als auch in Form von Mischungen untereinander zur Anwendung kommen.

Geeignete Polyester-Diole können beispielsweise aus Dicarbonsäuren mit 2 bis 12 Kohlenstoffatomen, vorzugsweise 4 bis 6 Kohlenstoffatomen, und mehrwertigen Alkoholen hergestellt werden. Als Dicarbonsäuren kommen beispielsweise in Betracht: aliphatische Dicarbonsäuren wie Bernsteinsäure, Glutarsäure, Adipinsäure, Korksäure, Azelainsäure und Sebacinsäure, oder aromatische Dicarbonsäuren, wie Phthalsäure, Isophthalsäure und Terephthalsäure. Die Dicarbonsäuren können einzeln oder als Gemische, z.B. in Form einer Bernstein-, Glutar- und Adipinsäuremischung, verwendet werden. Zur Herstellung der Polyester-Diole kann es gegebenenfalls vorteilhaft sein, anstelle der Dicarbonsäuren die entsprechenden Dicarbonsäurederivate, wie Carbonsäurediester mit 1 bis 4 Kohlenstoffatomen im Alkoholrest, Carbonsäureanhydride oder Carbonsäurechloride zu verwenden. Beispiele für mehrwertige Alkohole sind Glykole mit 2 bis 10, vorzugsweise 2 bis 6 Kohlenstoffatomen, z:B. Ethylenglykol, Diethylenglykol, 1,4-Butandiol, 1,5-Pentandiol, 1,6-Hexandiol, 1,10-Decandiol, 2,2-Dimethyl-1,3-propandiol, 1,3-Propandiol oder Dipropylenglykol. Je nach den gewünschten Eigenschaften können die mehrwertigen Alkohole allein oder in Mischung untereinander verwendet werden. Geeignet sind ferner Ester der Kohlensäure mit den genannten Diolen, insbesondere solchen mit 4 bis 6 Kohlenstoffatomen, wie 1,4-Butandiol oder 1,6-Hexandiol, Kondensationsprodukte von ω-Hydroxycarbonsäuren wie ω-Hydroxycapronsäure oder Polymerisationsprodukte von Lactonen, z.B. gegebenenfalls substituierten ω-Caprolactonen. Als Polyester-Diole vorzugsweise verwendet werden Ethandiol-polyadipate, 1,4-Butandiolpolyadipate, Ethandiol-1,4-butandiolpolyadipate, 1,6-Hexandiol-neopentylglykolpolyadipate, 1,6-Hexandiol-1,4-butandiolpolyadipate und Polycaprolactone. Die Polyester-Diole besitzen zahlenmittlere Molekulargewichte $\bar{M}_n$ von 450 bis 10000 und können einzeln oder in Form

von Mischungen untereinander zur Anwendung kommen.

Zerewitinoffaktive Polyole (C) sind sogenannte Kettenverlängerungsmittel und besitzen im Mittel 1,8 bis 3,0 zerewitinoffaktive Wasserstoffatome und haben ein Molekulargewicht von 60 bis 400. Hierunter versteht man neben Aminogruppen, Thiolgruppen oder Carboxylgruppen aufweisenden Verbindungen solche mit zwei bis drei, bevorzugt zwei Hydroxylgruppen.

Als Kettenverlängerungsmittel werden vorzugsweise aliphatische Diole mit 2 bis 14 Kohlenstoffatomen eingesetzt, wie z.B. Ethandiol, 1,2-Propandiol, 1,3-Propandiol, 1,4-Butandiol, 2,3-Butandiol, 1,5-Pentandiol, 1,6-Hexandiol, Diethylenglykol und Dipropylenglykol. Geeignet sind jedoch auch Diester der Terephthalsäure mit Glykolen mit 2 bis 4 Kohlenstoffatomen, z.B. Terephthalsäure-bis-ethylenglykol oder Terephthalsäure-bis-1,4-butandiol, Hydroxyalkylenether des Hydrochinons, z.B. 1,4-Di(β-hydroxyethyl)-hydrochinon, ethoxylierte Bisphenole, z.B. 1,4-Di(β-hydroxyethyl)-bisphenol A, (cyclo)aliphatische Diamine, wie Isophorondiamin, Ethylendiamin, 1,2-Propylendiamin, 1,3-Propylendiamin, N-Methyl-propylen-1,3-diamin, N,N'-Dimethylethylendiamin und aromatische Diamine, wie 2,4-Toluylendiamin, 2,6-Toluylendiamin, 3,5-Diethyl-2,4-toluylendiamin oder 3,5-Diethyl-2,6-toluylendiamin oder primäre mono-, di-, tri- oder tetraalkylsubstituierte 4,4'-Diaminodiphenylmethane. Besonders bevorzugt werden als Kettenverlängerer Ethandiol, 1,4-Butandiol, 1,6-Hexandiol, 1,4-Di(β-hydroxyethyl)-hydrochinon oder, 1,4-Di(β-hydroxyethyl)-bisphenol A verwendet. Es können auch Gemische der oben genannten Kettenverlängerer eingesetzt werden. Daneben können auch kleinere Mengen an Triolen zugesetzt werden.

Gegenüber Isocyanaten monofunktionelle Verbindungen können in Anteilen bis zu 2 Gew.-%, bezogen auf TPU, als sogenannte Kettenabbrecher eingesetzt werden. Geeignet sind z.B. Monoamine wie Butyl- und Dibutylamin, Octylamin, Stearylarnin, N-Methylstearylamin, Pyrrolidin, Piperidin oder Cyclohexylamin, Monoalkohole wie Butanol, 2-Ethylhexanol, Octanol, Dodecanol, Stearylalkohol, die verschiedenen Amylalkohole, Cyclohexanol und Ethylenglykolmonomethylether.

Die Flammschutzmittel (D) besitzen im Mittel mindestens 1,5 und höchstens 3,0, bevorzugt 1,8 bis 2,5, besonders bevorzugt 2 zerewitinoffaktive Wasserstoffatome. Diese zerewitinoffaktiven Wasserstoffatome basieren bevorzugt auf Alkohol oder Amin.

Die Flammschutzmittel (D) haben ein zahlenmittleres Molekulargewicht $\bar{M}_n$ von 60 bis 10000, bevorzugt 100 bis 5000, besonders bevorzugt 100 bis 1000.

Die Flammschutzmittel (D) basieren auf Phosphonat und/oder Phosphinoxid.

Als Phosphonat werden Verbindungen der allgemeinen Formel (I) eingesetzt:

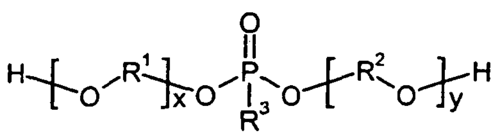

(I)

mit

- $R^1$, $R^2$ = verzweigte oder unverzweigte Alkylenreste mit 1 bis 24 C-Atomen, substituierte oder nicht-substituierte Arylenreste mit 6 bis 20 C-Atomen, substituierte oder nicht-substituierte Aralkylenreste mit 6 bis 30 C-Atomen, substituierte oder nicht-substituierte Alkarylenreste mit 6 bis 30 C-Atomen, wobei $R^1$ und $R^2$ gleich oder verschieden sein können,
- $R^3$ = H, verzweigte oder unverzweigte Alkylreste mit 1 bis 24 C-Atomen, substituierte oder nicht-substituierte Arylreste mit 6 bis 20 C-Atomen, substituierte oder nicht-substituierte Aralkylreste mit 6 bis 30 C-Atomen, substituierte oder nicht-substituierte Alkarylreste mit 6 bis 30 C-Atomen,
- x, y = 1 bis 50.

Als Phosphinoxid werden Verbindungen der allgemeinen Formel (II) eingesetzt:

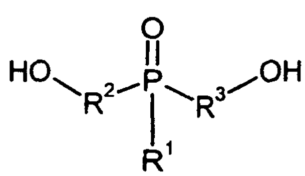

(II)

mit

$R^1$ = H, verzweigte oder unverzweigte Alkylreste mit 1 bis 24 C-Atomen, substituierte oder nicht-substituierte Arylreste mit 6 bis 20 C-Atomen, substituierte oder nicht-substituierte Aralkylreste mit 6 bis 30 C-Atomen, substituierte oder nicht-substituierte Alkarylreste mit 6 bis 30 C-Atomen,

$R^2$, $R^3$= verzweigte oder unverzweigte Alkylenreste mit 1 bis 24 C-Atomen, substituierte oder nicht-substituierte Arylenreste mit 6 bis 20 C-Atomen, substituierte oder nicht-substituierte Aralkylenreste mit 6 bis 30 C-Atomen, substituierte oder nicht-substituierte Alkarylenreste mit 6 bis 30 C-Atomen, wobei $R^2$ und $R^3$ gleich oder verschieden sein können.

Die Flammschutzmittel (D) kommen vorzugsweise in einer Menge von 1 bis 15, besonders bevorzugt 1 bis 10 Gew.-% bezogen auf die Gesamtmenge TPU zum Einsatz.

Als Flammschutzmittel (F) können die aus dem Stand der Technik bekannten Flammschutzmittel eingesetzt werden, siehe z. B. H. Zweifel, Plastics Additives Handbook, 5th Ed., Hanser Verlag München, 2001, Kapitel 12; J. Green, J. of Fire Sciences, 1997, 15, S. 52-67 oder Kirk-Othmer Encyclopedia of Chemical Technology, 4th Ed., Vol. 10, John Wiley & Sons, New York, S. 930-998.

Die relativen Mengen der Verbindungen (B), (C) und (D) werden bevorzugt so gewählt, dass das Verhältnis der Summe der Isocyanatgruppen in (A) zu der Summe der zerewitinoffaktiven Wasserstoffatome in (B), (C) und (D) 0,85:1 bis 1,2:1 beträgt, bevorzugt 0,95:1 bis 1,1:1.

Die erfindungsgemäßen, thermoplastischen Polyurethanelastomere können als Hilfs- und Zusatzstoffe (G) bis zu maximal 20 Gew.-%, bezogen auf die Gesamtmenge an TPU, der üblichen Hilfs- und Zusatzstoffe enthalten. Typische Hilfs- und Zusatzstoffe, sind Gleitmittel und Entformungsmittel, wie Fettsäureester, deren Metallseifen, Fettsäureamide, Fettsäureesteramide und Siliconverbindungen, Antiblockmittel, Inhibitoren, Stabilisatoren gegen Hydrolyse, Licht, Hitze und Verfärbung, Farbstoffe, Pigmente, anorganische und/oder organische Füllstoffe, Weichmacher, wie Phosphate, Phthalate, Adipate, Sebacate und Alkylsulfonsäureester, fungistatisch und bakteriostatisch wirkende Substanzen sowie Füllstoffe und deren Mischungen.und Verstärkungsmittel. Verstärkungsmittel sind insbesondere faserartige Verstärkungsstoffe wie z.B. anorganische Fasern, die nach dem Stand der Technik hergestellt werden und auch mit einer Schlichte beaufschlagt sein können. Nähere Angaben über die genannten Hilfs- und Zusatzstoffe sind der Fachliteratur, beispielsweise der Monographie von J.H. Saunders und K.C. Frisch "High Polymers", Band XVI, Polyurethane, Teil 1 und 2, Verlag Interscience Publishers 1962 bzw. 1964 , dem Taschenbuch für Kunststoff Additive von R.Gächter u. H.Müller (Hanser Verlag München 1990) oder der DE-A 29 01 774 zu entnehmen.

Weitere Zusätze, die in das TPU eingearbeitet werden können, sind Thermoplaste, beispielsweise Polycarbonate und Acrylnitril/Butadien/Styrol-Terpolymere, insbesondere ABS. Auch andere Elastomere wie Kautschuk, Ethylen/Vinylacetatcopolymere, Styrol/Butadiencopolymere sowie andere TPU können verwendet werden.

Geeignete erfindungsgemäße Katalysatoren (E) sind die nach dem Stand der Technik bekannten und üblichen tertiären Amine, wie z.B. Triethylamin, Dimethylcyclohexylamin, N-Methylmorpholin, N,N'-Dimethylpiperazin, 2-(Dimethylaminoethoxy)ethanol, Diazabicyclo[2,2,2]octan und ähnliche sowie insbesondere organische Metallverbindungen wie Titansäureester, Eisenverbindungen oder Zinnverbindungen wie Zinndiacetat, Zinndioctoat, Zinndilaurat oder die Zinndialkylsalze aliphatischer Carbonsäuren wie Dibutylzinndiacetat oder Dibutylzinndilaurat oder ähnliche. Bevorzugte Katalysatoren sind organische Metallverbindungen, insbesondere Titansäureester, Eisen- und Zinnverbindungen. Die Gesamtmenge an Katalysatoren in den erfindungsgemäßen TPU beträgt in der Regel etwa 0 bis 5 Gew.-%, bevorzugt 0 bis 2 Gew.-%, bezogen auf die Gesamtmenge an TPU.

Ein weiterer Gegenstand der Erfindung ist ein Verfahren zur Herstellung thermoplastisch verarbeitbarer Polyurethanelastomere (TPU) mit Zugfestigkeiten von >35 MPa (gemessen nach EN ISO 527-3), mit Schwindungen von <3% und mit selbstverlöschenden Eigenschaften, welches dadurch gekennzeichnet ist, dass

a) ein NCO-Gruppen haltiges Prepolymer durch Umsetzung von

A) wenigstens einem organischen Diisocyanat mit

B) wenigstens einem Polyol mit im Mittel mindestens 1,8 und höchstens 3,0 zerewitinoffaktiven Wasserstoffatomen und einem zahlenmittleren Molekulargewicht $\overline{M}_n$ von 450 bis 10000

hergestellt wird,

b) das in a) hergestellte Prepolymer mit

C) wenigstens einem niedermolekularen Polyol oder Polyamin mit im Mittel mindestens 1,8 und höchstens 3,0 zerewitinoffaktiven Wasserstoffatomen und einem zahlenmittleren Molekulargewicht $\bar{M}_n$ von 60 bis 400 als Kettenverlängerer und

D) mindestens einer organischen phosphorhaltigen Verbindung auf Basis Phosphonat und/oder Phosphinoxid mit im Mittel mindestens 1,5 und höchstens 3,0 zerewitinoffaktiven Wasserstoffatomen und einem zahlenmittleren Molekulargewicht $\bar{M}_n$ von 60 bis 10000 in einer Menge von 1 bis 15 Gew.-%, bezogen auf das TPU, welches die folgende Strukturformel aufweist

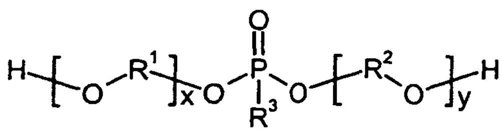

(I)

mit

$R^1$, $R^2$ = verzweigte oder unverzweigte Alkylenreste mit 1 bis 24 C-Atomen, substituierte oder nicht-substituierte Arylenreste mit 6 bis 20 C-Atomen, substituierte oder nicht-substituierte Aralkylenreste mit 6 bis 30 C-Atomen, substituierte oder nicht-substituierte Alkarylenreste mit 6 bis 30 C-Atomen, wobei $R^1$ und $R^2$ gleich oder verschieden sein können,

$R^3$ = H, verzweigte oder unverzweigte Alkylreste mit 1 bis 24 C-Atomen, substituierte oder nicht-substituierte Arylreste mit 6 bis 20 C-Atomen, substituierte oder nicht-substituierte Aralkylreste mit 6 bis 30 C-Atomen, substituierte oder nicht-substituierte Alkarylreste mit 6 bis 30 C-Atomen,

x, y = 1 bis 50

oder

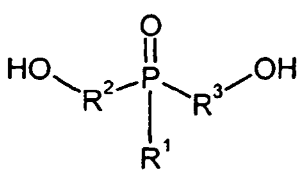

(II)

mit

$R^1$ = H, verzweigte oder unverzweigte Alkylreste mit 1 bis 24 C-Atomen, substituierte oder nicht-substituierte Arylreste mit 6 bis 20 C-Atomen, substituierte oder nicht-substituierte Aralkylreste mit 6 bis 30 C-Atomen, substituierte oder nicht-substituierte Alkarylreste mit 6 bis 30 C-Atomen,

$R^2$, $R^3$= verzweigte oder unverzweigte Alkylenreste mit 1 bis 24 C-Atomen, substituierte oder nicht-substituierte Arylenreste mit 6 bis 20 C-Atomen, substituierte oder nicht-substituierte Aralkylenreste mit 6 bis 30 C-Atomen, substituierte oder nicht-substituierte Alkarylenreste mit 6 bis 30 C-Atomen, wobei $R^2$ und $R^3$ gleich oder verschieden sein können,

umgesetzt wird,
wobei die Schritte a) und/oder b) gegebenenfalls in Gegenwart von Katalysatoren E) und gegebenenfalls unter Zugabe von

F) mindestens einem weiteren Flammschutzmittel, welches keine zerewitinoffaktiven Wasserstoffatome enthält und ein zahlenmittleres Molekulargewicht $\bar{M}_n$ von 60 bis 10000 aufweist, in einer Menge von 0 bis 70 Gew.-%, bezogen auf das TPU, und

G) 0 bis 20 Gew.-%, bezogen auf die Gesamtmenge TPU, weiterer Hilfs- und Zusatzstoffe,

durchgeführt werden und wobei die Kennzahl (gebildet aus dem mit 100 multiplizierten Quotienten der Äquivalenzverhältnisse der Isocyanatgruppen aus (A) und der Summe der zerewitinoffaktiven Wasserstoffatome der Verbindungen (B), (C) und (D)) 85 bis 120 beträgt.

Das erfindungsgemäße Herstellverfahren wird vorzugsweise wie folgt ausgeführt:

Die Herstellung der TPU kann diskontinuierlich oder kontinuierlich durchgeführt werden. Kontinuierlich können die TPU beispielsweise mit dem Mischkopf/Bandverfahren oder dem sogenannten Extruderverfahren hergestellt werden.

Es wird zuerst ein Prepolymer aus den Komponenten A) und B) hergestellt, wonach die Komponenten C) und D) mit diesem Prepolymer zu Reaktion gebracht werden. Dabei kann das Prepolymer sowohl batchweise vorgelegt als auch kontinuierlich in einem Teil des Extruders oder in einem separaten, vorgeschalteten Prepolymeraggregat hergestellt werden. Die Komponenten C) und D) können zusammen oder getrennt dem Prepolymer zugegeben werden.

Das erfindungsgemäße TPU kann gegebenenfalls weiter bearbeitet werden, z.B. durch Temperung des Polymers in Form von Platten oder Blöcken, Zerkleinerung oder Granulierung in Schreddern oder Mühlen, Entgasung sowie Granulierung unter Aufschmelzen. Bevorzugt wird das Polymer durch ein Aggregat zur kontinuierlichen Entgasung und Strangbildung geführt. Bei diesem Aggregat kann es sich z.B. um eine Mehrwellenschneckenmaschine (ZSK) handeln.

Die erfindungsgemäßen TPU werden bevorzugt zur Herstellung von Spritzgießartikeln und Extrusionsartikeln eingesetzt.

Die Erfindung soll anhand der nachfolgenden Beispiele näher erläutert werden.

Im folgenden verwendete Abkürzungen:

| | |
|---|---|
| Terathane® 1000 | Polyether mit einem Molekulargewicht von $M_n$ = 1000 g/mol; Produkt der Firma Du Pont de Nemours |
| MDI | Methylen-4,4'-(Phenylisocyanat) |
| Exolit® OP 560 | Flammschutzmittel auf Basis Diol-Phosphonat der Firma Clariant GmbH mit zerewitinoffaktiven Wasserstoffatomen |
| Exolit® OP 910 | Flammschutzmittel auf Basis Phosphonat der Firma Clariant GmbH (ohne zerewitinoffaktive Wasserstoffatome) |
| Levagard® 4090N | Flammschutzmittel der Firma Bayer AG ($OP(OC_25)_2CH_2N(C_2H_4OH)_2$) |
| Cyagard RF-1243 | Flammschutzmittel auf Basis Diol-Phosphinoxid der Firma Cytec, Inc. |
| BDO: | 1,4-Butandiol |
| Irganox® 1010 | Tetrakis(methylen-(3,5-di-tert.-butyl-4-hydroxycinnamate))-methan der Firma Ciba Specialty Chemicals Inc. |
| Licowax®C | Trennmittel der Firma Clariant Würtz GmbH |

## Beispiele

### Beispiel 1 (Vergleichsbeispiel zu EP-B- 0 617 079)

Das Beispiel 1 aus EP-B 0 617 079 wurde nachgestellt. Dabei wurde ein TPU-Formkörper mit einer Shore A Härte von 85 nach dem Bandverfahren hergestellt, welches aus Polyoxymethylenglykol mit einem zahlenmittleren Molekulargewicht von 1000, MDI und BDO bei einer Temperatur von ca. 180˚C aufgebaut wurde. Als Flammschutzmittel wurden 25 Gew.-% Melamincyanurat und 4Gew.-% Phosphorsäure-1,3-Phenylen-tetraxylenylester zugegeben.

Die Ergebnisse sind der Tabelle zu entnehmen.

### Beispiel 2 (Vergleichsbeispiel)

Ein Gemisch aus 1159 g Terathane® 1000, 139 g BDO, 200 g Exolit® OP 910, 7 g Irganox® 1010 und 10 g Licowax® C wurde unter Rühren mit einem Flügelrührer mit einer Drehzahl von 500 Umdrehungen pro Minute (UpM) auf 160˚C hochgeheizt, wonach 684 g MDI zugegeben wurde. Anschließend wurde 110 s gerührt, wonach das TPU ausgegossen wurde. Zum Schluss wurde das Material 30 min bei 80˚C nachbehandelt.

Das fertige TPU wurde geschnitten, granuliert und zu Prüfkörpern verspritzt, wonach Zugfestigkeit, Ausblühverhalten, Schwindung und UL-Test ermittelt wurden. Die Ergebnisse dieser Messungen sind der Tabelle zu entnehmen.

**Beispiel 3 (Vergleichsbeispiel)**

Ein Gemisch aus 1045 g Terathane® 1000, 125 g BDO, 100 g Exolit® OP 560, 6,3 g Irganox® 1010 und 10 g Licowax® C wurde unter Rühren mit einem Flügelrührer mit einer Drehzahl von 500 UpM auf 160˚C hochgeheizt, wonach 713 g MDI zugegeben wurde. Anschließend wurde 110 s gerührt, wonach das TPU ausgegossen wurde. Zum Schluss wurde das Material 30 min bei 80˚C nachbehandelt.

Das fertige TPU wurde geschnitten, granuliert und zu Prüfkörpern verspritzt, wonach Zugfestigkeit, Schwindung, Ausblühverhalten und UL-94V-Test ermittelt wurden. Die Ergebnisse dieser Messungen sind der Tabelle zu entnehmen.

**Beispiel 4 (Vergleichsbeispiel)**

Ein Gemisch aus 1045 g Terathane® 1000, 100 g Exolit® OP 560, 6,3 g Irganox® 1010 und 10 g Licowax® C wurde unter Rühren mit einem Flügelrührer mit einer Drehzahl von 500 UpM auf 160˚C hochgeheizt, wonach 713 g MDI zugegeben wurde. Nach Erreichen der maximalen Reaktionstemperatur wurde 30 s nachgerührt, wonach 125 g BDO zugegeben wurden. Anschließend wurde 100 s gerührt, wonach das TPU ausgegossen wurde. Zum Schluss wurde das Material 30 min bei 80˚C nachbehandelt.

Das fertige TPU wurde geschnitten, granuliert und zu Prüfkörpern verspritzt, wonach Zugfestigkeit, Schwindung, Ausblühverhalten und UL-Test ermittelt wurden. Die Ergebnisse dieser Messungen sind der Tabelle zu entnehmen.

**Beispiel 5 (Erfindungsgemäß)**

Ein Gemisch aus 1045 g Terathane® 1000, 6,3 g Irganox® 1010 und 10 g Licowax® C wurde unter Rühren mit einem Flügelrührer mit einer Drehzahl von 500 UpM auf 160˚C hochgeheizt, wonach 713 g MDI zugegeben wurde. Nach Erreichen der maximalen Reaktionstemperatur wurde 30 s nachgerührt, wonach 125 g BDO und 100 g Exolit® OP 560 zugegeben wurden. Anschließend wurde 100 s gerührt, wonach das TPU ausgegossen wurde. Zum Schluss wurde das Material 30 min bei 80˚C nachbehandelt.

Das fertige TPU wurde geschnitten, granuliert und zu Prüfkörpern verspritzt, wonach Zugfestigkeit, Ausblühverhalten, Schwindung und UL-Test ermittelt wurden. Die Ergebnisse dieser Messungen sind der Tabelle zu entnehmen.

**Beispiel 6 (Erfindungsgemäß)**

Ein Gemisch aus 1045 g Terathane® 1000, 6,3 g Irganox® 1010 und 10 g Licowax®C wurde unter Rühren mit einem Flügelrührer mit einer Drehzahl von 500 UpM auf 160˚C hochgeheizt, wonach 795 g MDI zugegeben wurde. Nach Erreichen der maximalen Reaktionstemperatur wurde 30 s nachgerührt, wonach 125 g BDO und 220 g Exolit® OP 560 zugegeben wurden. Anschließend wurde 100 s gerührt, wonach das TPU ausgegossen wurde. Zum Schluss wurde das Material 30 min bei 80˚C nachbehandelt.

Das fertige TPU wurde geschnitten, granuliert und zu Prüfkörpern verspritzt, wonach Zugfestigkeit, Ausblühverhalten, Schwindung und UL-Test ermittelt wurden. Die Ergebnisse dieser Messungen sind der Tabelle zu entnehmen.

**Beispiel 7 (Erfindungsgemäß)**

Ein Gemisch aus 1045 g Terathane® 1000, 6,3 g Irganox® 1010 und 10 g Licowax®C wurde unter Rühren mit einem Flügelrührer mit einer Drehzahl von 500 UpM auf 160˚C hochgeheizt, wonach 686 g MDI zugegeben wurde. Nach Erreichen der maximalen Reaktionstemperatur wurde 30 s nachgerührt, wonach 125 g BDO und 80 g Cyagard® RF-1243 zugegeben wurden. Anschließend wurde 100 s gerührt, wonach das TPU ausgegossen wurde. Zum Schluss wurde das Material 30 min bei 80˚C nachbehandelt.

Das fertige TPU wurde geschnitten, granuliert und zu Prüfkörpern verspritzt, wonach Zugfestigkeit, Ausblühverhalten, Schwindung und UL-Test ermittelt wurden. Die Ergebnisse dieser Messungen sind der Tabelle zu entnehmen.

**Beispiel 8 (Vergleichsbeispiel zu DE-C 25 20 180)**

Ein Gemisch aus 1000 g Terathane® 1000, 119 g BDO, 23 g Levagard® 4090N, 6 g Irganox® 1010 und 9 g Licowax® C wurde unter Rühren mit einem Flügelrührer mit einer Drehzahl von 500 UpM auf 160˚C hochgeheizt, wonach 615 g MDI zugegeben wurde. Anschließend wurde 110 s gerührt, wonach das TPU ausgegossen wurde. Zum Schluss wurde das Material 30 min bei 80˚C nachbehandelt.

Das fertige TPU wurde geschnitten, granuliert und zu Prüfkörpern verspritzt, wonach Zugfestigkeit, Ausblühverhalten, Schwindung und UL-Test ermittelt wurden. Die Ergebnisse dieser Messungen sind der Tabelle zu entnehmen.

**Beispiel 9 (Vergleichsbeispiel zu DE-C 25 20 180)**

Ein Gemisch aus 1000 g Terathane® 1000, 23 g Levagard® 4090N, 6 g Irganox® 1010 und 9 g Licowax® C wurde unter Rühren mit einem Flügelrührer mit einer Drehzahl von 500 UpM auf 160˚C hochgeheizt, wonach 615 g MDI zugegeben wurden. Nach Erreichen der maximalen Temperatur wurde 30 s nachgerührt, wonach 119 g BDO zugegeben wurde. Anschließend wurde 100 s gerührt, wonach das TPU ausgegossen wurde. Zum Schluss wurde das Material 30 min bei 80˚C nachbehandelt.

Das fertige TPU wurde geschnitten, granuliert und zu Prüfkörpern verspritzt, wonach Zugfestigkeit, Ausblühverhalten, Schwindung und UL-Test ermittelt wurden. Die Ergebnisse dieser Messungen sind der Tabelle zu entnehmen.

**Beispiel 10 (Erfindungsgemäß)**

Ein Gemisch aus 1045 g Terathane® 1000, 80 g Exolit® OP 910, 6,3 g Irganox® 1010 und 10 g Licowax® C wurde unter Rühren mit einem Flügelrührer mit einer Drehzahl von 500 UpM auf 160˚C hochgeheizt, wonach 600 g MDI zugegeben wurde. Nach Erreichen der maximalen Reaktionstemperatur wurde 30 s nachgerührt, wonach 125 g BDO und 60 g Exolit® OP 560 zugegeben wurden. Anschließend wurde 100 s gerührt, wonach das TPU ausgegossen wurde. Zum Schluss wurde das Material 30 min bei 80˚C nachbehandelt.

Das fertige TPU wurde geschnitten, granuliert und zu Prüfkörpern verspritzt, wonach Zugfestigkeit, Ausblühverhalten, Schwindung und UL-Test ermittelt wurden. Die Ergebnisse dieser Messungen sind der Tabelle zu entnehmen.

**<u>Bestimmung der Zugfestigkeit:</u>**

Die Zugfestigkeit wurde nach der Norm EN ISO 527-3 mit einem Probekörper Typ 5 mit einer Dicke von 2 mm bei einer Zuggeschwindigkeit von 200 mm/min ermittelt.

**Bestimmung der Schwindung:**

Als Schwindung wurde die Nachschwindung in der Länge gemäß DIN 53 464 an Spritzgießplatten mit folgenden Abmessungen ermittelt:

2,0 mm Dicke, 51,96 mm Breite und 128 mm Länge.

Nach dem Verspritzen auf einer Spritzgießmaschine wurden die Platten 72 Stunden bei Raumtemperatur gelagert, wonach die Länge des Prüfkörpers bestimmt wurde. Die Schwindung wurde dann wie folgt ermittelt:

$$\text{Schwindung (\%)} = \frac{(\text{Länge nach Lagerung} - \text{Länge vor Lagerung}) \times 100\%}{\text{Länge vor Lagerung}}$$

**Bestimmung des Ausblühverhaltens:**

Das Ausblühverhalten des Flammschutzmittels wurde anhand des folgenden Testes ermittelt: Ein Prüfkörper wurde bei Raumtemperatur bei einem Luftfeuchtigkeitsgrad von 80% über eine Woche gelagert. Danach wurde die Oberfläche des Prüfkörpers auf ausgeblühte Substanzen optisch überprüft.

**Ermittlung der Flammschutzeigenschaften:**

Die Flammschutzeigenschaften wurden gemäß UL94 V bei einer Dicke des Prüfkörpers von 3 mm, wie in Underwriters Laboratories Inc. Standard of Safety, "Test for Flammability of Plastic Materials for Parts in Devices and Appliances", S14 ff, Northbrook 1998 und J. Triotzsch, "International Plastics Flammability Handbook", S 346 ff, Hanser Verlag, München 1990 beschrieben, ermittelt. In diesem Test bedeutet eine V-0-Bewertung ein nicht brennendes Abtropfen. Ein Produkt mit dieser Bewertung wird deshalb als flammwidrig bezeichnet. Eine V-2-Bewertung bedeutet ein brennendes Abtropfen, d.h. eine schlechte Flammwidrigkeit

**Tabelle**

| Beispiel | Verfahren | Flammschutzmittel | Zugfestigkeit (MPa) | UL94 V- Bewertung (3 mm) | Schwindung (%) | Ausblühverhalten |
|---|---|---|---|---|---|---|
| **1 (Vergleich)** | Band-verfahren | 25%Melamincyanurat<br>4% Phosphat | 25 | V-0 | n.b. | kein Belag |
| **2 (Vergleich)** | one shot | 10% Exolit® OP 910 | 47 | V-0 | 1,5 | viel Belag, klebrig |
| **3 (Vergleich)** | one-shot | 5% Exolit® OP 560 | 51 | V-0 | 7 | kein Belag |
| **4 (Vergleich)** | Prepolymer aus Exolit und Terathane mit MDI | 5% Exolit® OP 560 | 49 | V-2 | 3 | kein Belag |
| **5** | Prepolymer nur aus Terathane und MDI | 5% Exolit® OP 560 | 53 | V-0 | 2 | kein Belag |
| **6** | Prepolymer nur aus Terathane und MDI | 10% Exolit® OP 560 | 50 | V-0 | n.b. | kein Belag |
| **7** | Prepolymer aus Terathane und Cyagard RF-1243 | 4% Cyagard® RF-1243 | 52 | V-0 | 2 | kein Belag |
| **8 (Vergleich)** | one-shot | 2% Levagard® 4090N | 45 | V-0 | 6 | kein Belag |
| **3 (Vergleich)** | Prepolymer aus Levagard und Terathane mit MDI | 2% Levagard® 4090N | 43 | V-2 | 4 | kein Belag |
| **10** | Prepolymer nur aus Terathane und MDI | 3% Exolit® OP 560<br>4% Exolit® OP 910 | 48 | V-0 | 2 | Geringer Belag |

n.b.: nicht bestimmt.

In den Vergleichsbeispielen 1 und 2 werden nicht-einbaufähige Flammschutzmittel eingesetzt. Durch den Einsatz von Melamincyanurat wird die Mechanik verschlechtert (Reißfestigkeit 25 MPa). In Beispiel 2 wird ein Ausblühen des Flammschutzmittels beobachtet, was zu einer erhöhten Klebrigkeit führt.

Beim Einsatz einbaufähiger Flammschutzmittel im one-shot-Verfahren (Beispiel 3 und 8) wird zwar die gewünschte V-0-Bewertung erreicht, die Produkte zeigen jedoch eine hohe Schwindung auf.

Der Einsatz eines einbaufähigen Flammschutzmittels mit dem Polyol (B) zur Herstellung des Prepolymers (Beispiel 4 und 9) führt zu deutlich schlechten Flammschutzeigenschaften (V-2-Bewertung).

Der Einsatz des Flammschutzmittels Levagard® 4090N führt laut DE-C 2520 180 zu sehr guten Ergebnissen in Polyurethan-Schäumen. Die mit diesem Flammschutzmittel hergestellten TPU weisen jedoch zu hohe Schwindungen auf.

Die erfindungsgemäßen Beispiele 5, 6, 7 und 10 beschreiben den Einsatz des einbaufähigen Flammschutzmittels, wobei sowohl gute Flammwidrigkeiten als auch geringe Schwindungen bei gleichzeitig hohem mechanischen Eigenschaftsniveau ohne Ausblüheffekte erzielt werden.

## Patentansprüche

**1.** Thermoplastisch verarbeitbare Polyurethanelastomere (TPU) mit Zugfestigkeiten von >35 MPa (gemessen nach EN ISO 527-3), mit Schwindungen von <3 % und mit selbstverlöschenden Eigenschaften erhältlich gegebenenfalls in Gegenwart von Katalysatoren (E) durch Umsetzung
eines NCO-Gruppen-haltigen Prepolymers aus

A) wenigstens einem organischen Diisocyanat und
B) wenigstens einem Polyol mit im Mittel mindestens 1,8 und höchstens 3,0 zerewitinoffaktiven Wasserstoffatomen und einem zahlenmittleren Molekulargewicht $\overline{M}_n$ von 450 bis 10000
mit
C) wenigstens einem niedermolekularen Polyol oder Polyamin mit im Mittel mindestens 1,8 und höchstens 3,0 zerewitinoffaktiven Wasserstoffatomen und einem zahlenmittleren Molekulargewicht $\overline{M}_n$ von 60 bis 400 als Kettenverlängerer und
D) mindestens einer organischen phosphorhaltigen Verbindung auf Basis Phosphonat und/oder Phosphinoxid mit im Mittel mindestens 1,5 und höchstens 3,0 zerewitinoffaktiven Wasserstoffatomen und einem zahlenmittleren Molekulargewicht $\overline{M}_n$ von 60 bis 10000 in einer Menge von 1 bis 15 Gew.-%, bezogen auf die Gesamtmenge an TPU, welches die folgende Strukturformel aufweist

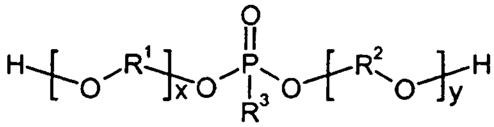 (I)

mit

$R^1$,$R^2$ = verzweigte oder unverzweigte Alkylenreste mit 1 bis 24 C-Atomen, substituierte oder nicht-substituierte Arylenreste mit 6 bis 20 C-Atomen, substituierte oder nicht-substituierte Aralkylenreste mit 6 bis 30 C-Atomen, substituierte oder nicht-substituierte Alkarylenreste mit 6 bis 30 C-Atomen, wobei $R^1$ und $R^2$ gleich oder verschieden sein können,
$R^3$ = H, verzweigte oder unverzweigte Alkylreste mit 1 bis 24 C-Atomen, substituierte oder nicht-substituierte Arylreste mit 6 bis 20 C-Atomen, substituierte oder nicht-substituierte Aralkylreste mit 6 bis 30 C-Atomen, substituierte oder nicht-substituierte Alkarylreste mit 6 bis 30 C-Atomen,
x, y = 1 bis 50

oder

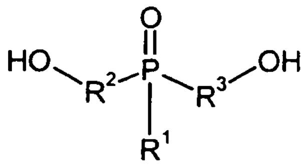

(II)

mit

$R^1$ = H, verzweigte oder unverzweigte Alkylreste mit 1 bis 24 C-Atomen, substituierte oder nicht-substituierte Arylreste mit 6 bis 20 C-Atomen, substituierte oder nicht-substituierte Aralkylreste mit 6 bis 30 C-Atomen, substituierte oder nicht-substituierte Alkarylreste mit 6 bis 30 C-Atomen,
$R^2$, $R^3$= verzweigte oder unverzweigte Alkylenreste mit 1 bis 24 C-Atomen, substituierte oder nicht-substituierte Arylenreste mit 6 bis 20 C-Atomen, substituierte oder nicht-substituierte Aralkylenreste mit 6 bis 30 C-Atomen, substituierte oder nicht-substituierte Alkarylenreste mit 6 bis 30 C-Atomen, wobei $R^2$ und $R^3$ gleich oder verschieden sein können, wobei die Komponenten (B) und (C) von Komponente (D) verschieden sind,

und gegebenenfalls unter Verwendung von
F) mindestens einem weiteren Flammschutzmittel, welches keine zerewitinoffaktiven Wasserstoffatome enthält und ein zahlenmittleres Molekulargewicht $\bar{M}_n$ von 60 bis 10000 aufweist, in einer Menge von 0 bis 70 Gew.-%, bezogen auf die Gesamtmenge an TPU, und
G) 0 bis 20 Gew.-%, bezogen auf die Gesamtmenge TPU, weiterer Hilfs- und Zusatzstoffe,

wobei die Kennzahl (gebildet aus dem mit 100 multiplizierten Quotienten der Äquivalenzverhältnisse der Isocyanatgruppen aus (A) und der Summe der zerewitinoffaktiven Wasserstoffatome der Verbindungen (B), (C) und (D)) 85 bis 120 beträgt.

**2.** Verfahren zur Herstellung thermoplastisch verarbeitbarer Polyurethanelastomere (TPU) mit Zugfestigkeiten von >35 MPa (gemessen nach EN ISO 527-3), mit Schwindungen von <3% und mit selbstverlöschenden Eigenschaften, **dadurch gekennzeichnet, dass**

a) ein NCO-Gruppen haltiges Prepolymer durch Umsetzung von

A) wenigstens einem organischen Diisocyanat mit
B) wenigstens einem Polyol mit im Mittel mindestens 1,8 und höchstens 3,0 zerewitinoffaktiven Wasserstoffatomen und einem zahlenmittleren Molekulargewicht $\bar{M}_n$ von 450 bis 10000

hergestellt wird,
b) das in a) hergestellte Prepolymer mit

C) wenigstens einem niedermolekularen Polyol oder Polyamin mit im Mittel mindestens 1,8 und höchstens 3,0 zerewitinoffaktiven Wasserstoffatomen und einem zahlenmittleren Molekulargewicht $\bar{M}_n$ von 60 bis 400 als Kettenverlängerer und
D) mindestens einer organischen phosphorhaltigen Verbindung auf Basis Phosphonat und/oder Phosphinoxid mit im Mittel mindestens 1,5 und höchstens 3,0 zerewitinoffaktiven Wasserstoffatomen und einem zahlenmittleren Molekulargewicht $\bar{M}_n$ von 60 bis 10000 in einer Menge von 1 bis 15 Gew.-%, bezogen auf die Gesamtmenge an TPU, welches die folgende Strukturformel aufweist

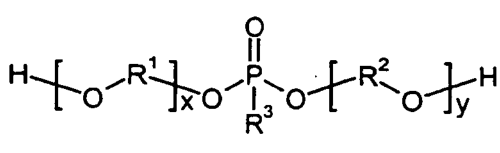

(I)

mit

$R^1$, $R^2$ = verzweigte oder unverzweigte Alkylenreste mit 1 bis 24 C-Atomen, substituierte oder nicht-substituierte Arylenreste mit 6 bis 20 C-Atomen, substituierte oder nicht-substituierte Aralkylenreste mit 6 bis 30 C-Atomen, substituierte oder nicht-substituierte Alkarylenreste mit 6 bis 30 C-Atomen, wobei $R^1$ und $R^2$ gleich oder verschieden sein können,
$R^3$ = H, verzweigte oder unverzweigte Alkylreste mit 1 bis 24 C-Atomen, substituierte oder nicht-substituierte Arylreste mit 6 bis 20 C-Atomen, substituierte oder nicht-substituierte Aralkylreste mit 6 bis 30 C-Atomen, substituierte oder nicht-substituierte Alkarylreste mit 6 bis 30 C-Atomen,
x, y = 1 bis 50

oder

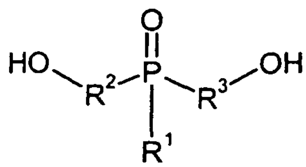

(II)

mit

$R^1$ = H, verzweigte oder unverzweigte Alkylreste mit 1 bis 24 C-Atomen, substituierte oder nicht-substituierte Arylreste mit 6 bis 20 C-Atomen, substituierte oder nicht-substituierte Aralkylreste mit 6 bis 30 C-Atomen, substituierte oder nicht-substituierte Alkarylreste mit 6 bis 30 C-Atomen,
$R^2$, $R^3$= verzweigte oder unverzweigte Alkylenreste mit 1 bis 24 C-Atomen, substituierte oder nicht-substituierte Arylenreste mit 6 bis 20 C-Atomen, substituierte oder nicht-substituierte Aralkylenreste mit 6 bis 30 C-Atomen, substituierte oder nicht-substituierte Alkarylenreste mit 6 bis 30 C-Atomen, wobei $R^2$ und $R^3$ gleich oder verschieden sein können,

umgesetzt wird, wobei die Komponenten (B) und (C) von Komponente (D) verschieden sind,
wobei die Schritte a) und/oder b) gegebenenfalls in Gegenwart von Katalysatoren E) und gegebenenfalls unter Zugabe von
F) mindestens einem weiteren Flammschutzmittel, welches keine zerewitinoffaktiven Wasserstoffatome enthält und ein zahlenmittleres Molekulargewicht $\bar{M}_n$ von 60 bis 10000 aufweist, in einer Menge von 0 bis 70 Gew.-%, bezogen auf die Gesamtmenge an TPU, und
G) 0 bis 20 Gew.-%, bezogen auf die Gesamtmenge TPU, weiterer Hilfs- und Zusatzstoffe,

durchgeführt werden und wobei die Kennzahl (gebildet aus dem mit 100 multiplizierten Quotienten der Äquivalenzverhältnisse der Isocyanatgruppen aus (A) und der Summe der zerewitinoffaktiven Wasserstoffatome der Verbindungen (B), (C) und (D)) 85 bis 120 beträgt.

3. Verfahren zur Herstellung thermoplastisch verarbeitbarer Polyurethanelastomere (TPU) gemäß Anspruch 2, **dadurch gekennzeichnet, dass** die reaktiven Komponenten C) und D) gleichzeitig dem Prepolymer zugegeben werden.

4. Verfahren zur Herstellung thermoplastisch verarbeitbarer Polyurethanelastomere (TPU) gemäß Anspruch 2, **dadurch gekennzeichnet, dass** zuerst die Komponente C) und danach die Komponente D) dem Prepolymer zugegeben werden.

5. Verfahren zur Herstellung thermoplastisch verarbeitbarer Polyurethanelastomere (TPU) gemäß Anspruch 2, **dadurch gekennzeichnet, dass** zuerst die Komponente D) und danach die Komponente C) dem Prepolymer zugegeben werden.

6. Verfahren zur Herstellung thermoplastisch verarbeitbarer Polyurethanelastomere (TPU) gemäß Anspruch 2, **dadurch gekennzeichnet, dass** das Diisocyanat A) ein aromatisches Diisocyanat ist.

7. Verfahren zur Herstellung thermoplastisch verarbeitbarer Polyurethanelastomere (TPU) gemäß Anspruch 2, **dadurch gekennzeichnet, dass** das Polyol B) ein Polyether ist.

8. Verfahren zur Herstellung thermoplastisch verarbeitbarer Polyurethanelastomere (TPU) gemäß Anspruch 2, **dadurch gekennzeichnet, dass** das Polyol C) Ethylenglykol, Butandiol, Hexandiol, 1,4-Di-(betahydroxyethyl)-hydrochinon und/oder 1,4-Di-(betahydroxyethyl)bisphenol A ist.

9. Verfahren zur Herstellung thermoplastisch verarbeitbarer Polyurethanelastomere (TPU) gemäß Anspruch 2, **dadurch gekennzeichnet, dass** die Komponente D) eine Funktionalität von im Mittel 2 hat.

10. Verwendung der thermoplastisch verarbeitbaren Polyurethanelastomeren gemäß Anspruch 1 oder der nach dem Verfahren gemäß den Ansprüchen 2 bis 9 hergestellten thermoplastischen Polyurethane zur Herstellung von Spritzgießartikeln und Extrusionsartikeln.

**Claims**

1. Thermoplastically processable polyurethane elastomers (TPU) with tensile strengths of > 35 MPa (measured in accordance with EN ISO 527-3), with shrinkages of < 3% and with self-extinguishing properties which are obtainable optionally in the presence of catalysts (E) by reaction
of a prepolymer, containing NCO groups, of

A) at least one organic diisocyanate and
B) at least one polyol having on average at least 1.8 and not more than 3.0 Zerewitinoff-active hydrogen atoms and a number-average molecular weight $M_n$ of 450 to 10,000
with
C) at least one low molecular weight polyol or polyamine having on average at least 1.8 and not more than 3.0 Zerewitinoff-active hydrogen atoms and a number-average molecular weight $\overline{M}_n$ of 60 to 400 as a chain lengthener and
D) at least one organic phosphorus-containing compound based on phosponate and/or phosphine oxide having on average at least 1.5 and not more than 3.0 Zerewitinoff-active hydrogen atoms and a number-average molecular weight $\overline{M}_n$ of 60 to 10,000, in an amount of 1 to 15 wt.%, based on the total amount of TPU, which has the following formula structure

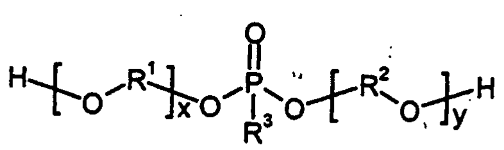

(I)

where

$R^1$, $R^2$ = branched or unbranched alkylene radicals have 1 to 24 C atoms, substituted or unsubstituted arylene radicals having 6 to 20 C atoms, substituted or unsubstituted aralkylene radicals having 6 to 30 C atoms or substituted or unsubstituted alkarylene radicals having 6 to 30 C atoms, wherein $R^1$ and $R^2$ can be identical or different,
$R^3$ = H, branched or unbranched alkyl radicals having 1 to 24 C atoms, substituted or unsubstituted aryl radicals having 6 to 20 C atoms, substituted or unsubstituted aralkyl radicals having 6 to 30 C atoms or substituted or unsubstituted alkaryl radicals having 6 to 30 C atoms,
x, y = 1 to 50

or

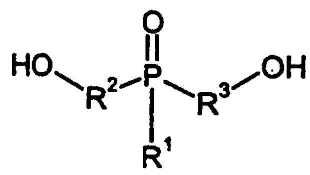

(II)

where

$R^1$ = H, branched or unbranched alkyl radicals having 1 to 24 C atoms, substituted or unsubstituted aryl radicals having 6 to 20 C atoms, substituted or unsubstituted aralkyl radicals having 6 to 30 C atoms or substituted or unsubstituted alkaryl radicals having 6 to 30 C atoms,

$R^2$, $R^3$ = branched or unbranched alkylene radicals having 1 to 24 C atoms, substituted or unsubstituted arylene radicals having 6 to 20 C atoms, substituted or unsubstituted aralkylene radicals having 6 to 30 C atoms or substituted or unsubstituted alkarylene radicals having 6 to 30 C atoms, wherein $R^2$ and $R^3$ can be identical or different,

wherein components (B) and (C) are different from component (D),

and optionally using

F) at least one further flameproofing agent which contains no Zerewitinoff-active hydrogen atoms and has a number-average molecular weight $\bar{M}_n$ of 60 to 10,000, in an amount of 0 to 70 wt.%, based on the total amount of TPU, and

G) 0 to 20 wt.%, based on the total amount of TPU, of further auxiliary substances and additives,

the characteristic number (formed from the quotient, multiplied by 100, of the equivalence ratios of the isocyanate groups from (A) and the sum of the Zerewitinoff-active hydrogen atoms of compounds (B), (C) and (D)) being 85 to 120.

**2.** Process for the preparation of thermoplastically processable polyurethane elastomers (TPU) with tensile strengths of > 35 MPa (measured in accordance with EN ISO 527-3), with shrinkages of < 3% and with self-extinguishing properties, **characterized in that**

a) a prepolymer containing NCO groups is prepared by reaction of

A) at least one organic diisocyanate with

B) at least one polyol having on average at least 1.8 and not more than 3.0 Zerewitinoff-active hydrogen atoms and a number-average molecular weight $\bar{M}_n$ of 450 to 10,000

b) the prepolymer prepared in a) is reacted with

C) at least one low molecular weight polyol or polyamine having on average at least 1.8 and not more than 3.0 Zerewitinoff-active hydrogen atoms and a number-average molecular weight $\bar{M}_n$ of 60 to 400 as a chain lengthener and

D) at least one organic phosphorus-containing compound based on phosponate and/or phosphine oxide having on average at least 1.5 and not more than 3.0 Zerewitinoff-active hydrogen atoms and a number-average molecular weight $\bar{M}_n$ of 60 to 10,000, in an amount of 1 to 15 wt.%, based on the total amount of TPU, which has the following formula structure

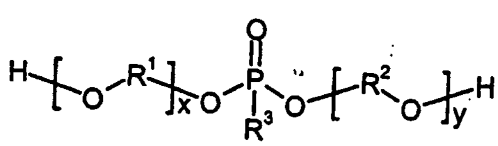

(I)

where

$R^1$, $R^2$ = branched or unbranched alkylene radicals have 1 to 24 C atoms, substituted or unsubstituted arylene radicals having 6 to 20 C atoms, substituted or unsubstituted aralkylene radicals having 6 to 30 C atoms or substituted or unsubstituted alkarylene radicals having 6 to 30 C atoms, wherein $R^1$ and $R^2$ can be identical or different,
$R^3$ = H, branched or unbranched alkyl radicals having 1 to 24 C atoms, substituted or unsubstituted aryl radicals having 6 to 20 C atoms, substituted or unsubstituted aralkyl radicals having 6 to 30 C atoms or substituted or unsubstituted alkaryl radicals having 6 to 30 C atoms,
x, y = 1 to 50

or

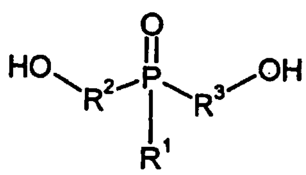

(II)

where

$R^1$ = H, branched or unbranched alkyl radicals having 1 to 24 C atoms, substituted or unsubstituted aryl radicals having 6 to 20 C atoms, substituted or unsubstituted aralkyl radicals having 6 to 30 C atoms or substituted or unsubstituted alkaryl radicals having 6 to 30 C atoms,
$R^2$, $R^3$ = branched or unbranched alkylene radicals having 1 to 24 C atoms, substituted or unsubstituted arylene radicals having 6 to 20 C atoms, substituted or unsubstituted aralkylene radicals having 6 to 30 C atoms or substituted or unsubstituted alkarylene radicals having 6 to 30 C atoms, wherein $R^2$ and $R^3$ can be identical or different,
wherein components (B) and (C) are different from component (D),

steps a) and/or b) optionally being carried out in the presence of catalysts E) and optionally with the addition of F) at least one further flameproofing agent which contains no Zerewitinoff-active hydrogen atoms and has a number-average molecular weight $\bar{M}_n$ of 60 to 10,000, in an amount of 0 to 70 wt.%, based on the total amount of TPU, and
G) 0 to 20 wt.%, based on the total amount of TPU, of further auxiliary substances and additives,

the characteristic number (formed from the quotient, multiplied by 100, of the equivalence ratios of the isocyanate groups from (A) and the sum of the Zerewitinoff-active hydrogen atoms of compounds (B), (C) and (D)) being 85 to 120.

**3.** Process for the preparation of thermoplastically processable polyurethane elastomers (TPU) according to claim 2, **characterized in that** the reactive components C) and D) are added simultaneously to the prepolymer.

**4.** Process for the preparation of thermoplastically processable polyurethane elastomers (TPU) according to claim 2, **characterized in that** first component C) and then component D) is added to the prepolymer.

**5.** Process for the preparation of thermoplastically processable polyurethane elastomers (TPU) according to claim 2, **characterized in that** first component D) and then component C) is added to the prepolymer.

**6.** Process for the preparation of thermoplastically processable polyurethane elastomers (TPU) according to claim 2, **characterized in that** the diisocyanate A) is an aromatic diisocyanate.

**7.** Process for the preparation of thermoplastically processable polyurethane elastomers (TPU) according to claim 2, **characterized in that** the polyol B) is a polyether.

**8.** Process for the preparation of thermoplastically processable polyurethane elastomers (TPU) according to claim 2, **characterized in that** the polyol C) is ethylene glycol, butanediol, hexanediol, 1,4-di-(betahydroxyethyl)-hydroquinone and/or 1,4-di-(betahydroxyethyl)bisphenol A.

**9.** Process for the preparation of thermoplastically processable polyurethane elastomers (TPU) according to claim 2, **characterized in that** component D) has a functionality of on average 2.

**10.** Use of the thermoplastically processable polyurethane elastomers according to claim 1 or of the thermoplastic polyurethanes prepared by the process according to claims 2 to 9 for the production of injection-moulded articles and extruded articles.

**Revendications**

**1.** Elastomères de polyuréthanne thermoplastiques (TPU) présentant des résistances à la traction de >35 MPa (mesurées selon EN ISO 527-3), des retraits <3 % et des propriétés autoextinguibles, pouvant être obtenus le cas échéant en présence de catalyseurs (E) par conversion
d'un prépolymère contenant des groupes NCO constitué

A) d'au moins un diisocyanate organique et
B) d'au moins un polyol avec en moyenne au moins 1,8 et au plus 3,0 atomes d'hydrogène positifs au test de Zerevitinov et un poids moléculaire moyen en nombre $\bar{M}_n$ de 450 à 10000
avec
C) au moins un polyol ou une polyamine à faible poids moléculaire avec en moyenne au moins 1,8 et au plus 3,0 atomes d'hydrogène positifs au test de Zerevitinov et un poids moléculaire moyen en nombre $\bar{M}_n$ de 60 à 400 comme prolongateur de chaîne et
D) au moins un composé organique contenant du phosphore à base de phosphonate et/ou d'oxyde de phosphine avec en moyenne au moins 1,5 et au plus 3,0 atomes d'hydrogène positifs au test de Zerevitinov et un poids moléculaire moyen en nombre $\bar{M}_n$ de 60 à 10000 en quantité de 1 à 15 % en poids, rapportée à la quantité totale de TPU, qui présente la formule de structure suivante

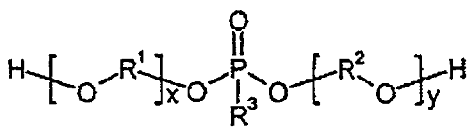

avec
$R^1$, $R^2$ = des restes alkylènes ramifiés ou non ramifiés avec 1 à 24 atomes de C, des restes arylènes substitués ou non substitués avec 6 à 20 atomes de C, des restes aralkylènes substitués ou non substitués avec 6 à 30 atomes de C, des restes alkarylènes substitués ou non substitués avec 6 à 30 atomes de C, $R^1$ et $R^2$ pouvant être identiques ou différents,
$R^3$ = H, des restes alkyles ramifiés ou non ramifiés avec 1 à 24 atomes de C, des restes aryles substitués ou non substitués avec 6 à 20 atomes de C, des restes aralkyles substitués ou non substitués avec 6 à 30 atomes de C, des restes alkaryles substitués ou non substitués avec 6 à 30 atomes de C,
x, y = 1 à 50
ou

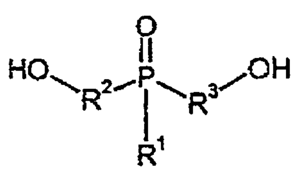

(II)

avec
$R^1$ = H, des restes alkyles ramifiés ou non ramifiés avec 1 à 24 atomes de C, des restes aryles substitués ou non substitués avec 6 à 20 atomes de C, des restes aralkyles substitués ou non substitués avec 6 à 30 atomes

de C, des restes alkaryles substitués ou non substitués avec 6 à 30 atomes de C,
$R^2$, $R^3$ = des restes alkylènes ramifiés ou non ramifiés avec 1 à 24 atomes de C, des restes arylènes substitués ou non substitués avec 6 à 20 atomes de C, des restes aralkylènes substitués ou non substitués avec 6 à 30 atomes de C, des restes alkarylènes substitués ou non substitués avec 6 à 30 atomes de C, $R^2$ et $R^3$ pouvant être identiques ou différents, les composants (B) et (C) étant différents du composant (D),
et le cas échéant avec utilisation de
F) au moins un autre agent ignifuge, lequel ne contient pas d'atomes d'hydrogène positifs au test de Zerevitinov et présente un poids moléculaire moyen en nombre $\bar{M}_n$ de 60 à 10000, en quantité de 0 à 70 % en poids, rapportée à la quantité totale de TPU, et
G) 0 à 20 % en poids, rapportés à la quantité totale de TPU, d'autres substances auxiliaires et additifs,

l'indice (formé quotients multipliés par 100 des rapports d'équivalence des groupes isocyanates de (A) et de la somme des atomes d'hydrogène positifs au test de Zerevitinov des composés (B), (C) et (D)) se monte à 85 à 120.

**2.** Procédé de fabrication d'élastomères de polyuréthanne thermoplastiques (TPU) présentant des résistances à la traction de >35 MPa (mesurées selon EN ISO 5273-3), des retraits <3% et des propriétés autoextinguibles, **caractérisés en ce que**

a) un prépolymère contenant des groupes NCO est fabriqué par réaction

A) d'au moins un diisocyanate organique avec
B) au moins un polyol avec en moyenne au moins 1,8 et au plus 3,0 atomes d'hydrogène positifs au test de Zerevitinov et un poids moléculaire moyen en nombre $\bar{M}_n$ de 450 à 10000,

b) le prépolymère fabriqué en a) est mis en réaction avec

C) au moins un polyol ou une polyamine à faible poids moléculaire avec en moyenne au moins 1,8 et au plus 3,0 atomes d'hydrogène positifs au test de Zerevitinov et un poids moléculaire moyen en nombre $\bar{M}_n$ de 60 à 400 comme prolongateur de chaîne et
D) au moins un composé organique contenant du phosphore à base de phosphonate et/ou d'oxyde de phosphine avec en moyenne au moins 1,5 et au plus 3,0 atomes d'hydrogène positifs au test de Zerevitinov et un poids moléculaire moyen en nombre $\bar{M}_n$ de 60 à 10000 en quantité de 1 à 15 % en poids, rapportée à la quantité totale de TPU, qui présente la formule de structure suivante

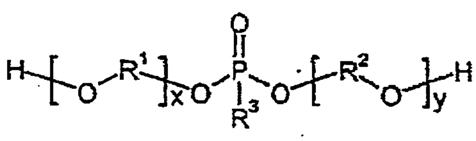

(I)

avec
$R^1$, $R^2$ = des restes alkylènes ramifiés ou non ramifiés avec 1 à 24 atomes de C, des restes arylènes substitués ou non substitués avec 6 à 20 atomes de C, des restes aralkylènes substitués ou non substitués avec 6 à 30 atomes de C, des restes alkarylènes substitués ou non substitués avec 6 à 30 atomes de C, $R^1$ et $R^2$ pouvant être identiques ou différents,
$R^3$ = H, des restes alkyles ramifiés ou non ramifiés avec 1 à 24 atomes de C, des restes aryles substitués ou non substitués avec 6 à 20 atomes de C, des restes aralkyles substitués ou non substitués avec 6 à 30 atomes de C, des restes alkaryles substitués ou non substitués avec 6 à 30 atomes de C,
x, y = 1 à 50
ou

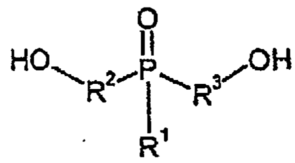

(II)

avec

R1 = H, des restes alkyles ramifiés ou non ramifiés avec 1 à 24 atomes de C, des restes aryles substitués où non substitués avec 6 à 20 atomes de C, des restes aralkyles substitués ou non substitués avec 6 à 30 atomes de C, des restes alkaryles substitués ou non substitués avec 6 à 30 atomes de C,

$R^2$, $R^3$ = des restes alkylènes ramifiés ou non ramifiés avec 1 à 24 atomes de C, des restes arylènes substitués ou non substitués avec 6 à 20 atomes de C, des restes aralkylènes substitués ou non substitués avec 6 à 30 atomes de C, des restes alkarylènes substitués ou non substitués avec 6 à 30 atomes de C, $R^2$ et $R^3$ pouvant être identiques ou différents, les composants (B) et (C) étant différents du composant (D), les étapes a) et/ou b) étant le cas échéant réalisées en présence de catalyseurs E) et le cas échéant avec addition de

F) au moins un autre agent ignifuge, lequel ne contient pas d'atomes d'hydrogène positifs au test de Zerevitinov et présente un poids moléculaire moyen en nombre $\bar{M}_n$ de 60 à 10000, en quantité de 0 à 70 % en poids, rapportée à la quantité totale de TPU, et

G) 0 à 20 % en poids, rapportés à la quantité totale de TPU, d'autres substances auxiliaires et additifs,

et l'indice (formé quotients multipliés par 100 des rapports d'équivalence des groupes isocyanates de (A) et de la somme des atomes d'hydrogène positifs au test de Zerevitinov des composés (B), (C) et (D)) se monte à 85 à 120.

**3.** Procédé de fabrication d'élastomères de polyuréthanne thermoplastiques (TPU) suivant la revendication 2, **caractérisé en ce que** les composants réactifs C) et D) sont ajoutés simultanément au prépolymère.

**4.** Procédé de fabrication d'élastomères de polyuréthanne thermoplastiques (TPU) suivant la revendication 2, **caractérisé en ce qu'**on ajoute d'abord le composant C) et ensuite le composant D) au prépolymère.

**5.** Procédé de fabrication d'élastomères de polyuréthanne thermoplastiques (TPU) suivant la revendication 2, **caractérisé en ce qu'**on ajoute d'abord le composant D) et ensuite le composant C) au prépolymère.

**6.** Procédé de fabrication d'élastomères de polyuréthanne thermoplastiques (TPU) suivant la revendication 2, **caractérisé en ce que** le diisocyanate A) est un diisocyanate aromatique.

**7.** Procédé de fabrication d'élastomères de polyuréthanne thermoplastiques (TPU) suivant la revendication 2, **caractérisé en ce que** le polyol B) est un polyéther.

**8.** Procédé de fabrication d'élastomères de polyuréthanne thermoplastiques (TPU) suivant la revendication 2, **caractérisé en ce que** le polyol C) est l'éthylène glycol, le butanediol, l'hexanediol, la 1,4-di-(bêtahydroxyéthyl)-hydroquinone et/ou le 1,4-di-(bêtahydroxyéthyl)bisphénol A.

**9.** Procédé de fabrication d'élastomères de polyuréthanne thermoplastiques (TPU) suivant la revendication 2, **caractérisé en ce que** le composant D) a en moyenne une fonctionnalité de 2.

**10.** Utilisation des élastomères de polyuréthanne thermoplastiques suivant la revendication 1 ou des polyuréthannes thermoplastiques fabriqués selon le procédé suivant les revendications 2 à 9 pour la fabrication d'articles moulés par injection et d'articles moulés par extrusion.